# FASCICULE DE BREVET EUROPEEN

(11) **EP 3 960 489 B1**
(45) Date de publication et mention de la délivrance du brevet: **11.01.2023**
(21) Numéro de dépôt: 21189120.5
(22) Date de dépôt: 02.08.2021
(51) Int. Cl.: B60B 17/00, B60B 9/16

(54) **DISPOSITIF DE SHUNTAGE ÉLECTRIQUE POUR UNE ROUE DE VÉHICULE FERROVIAIRE**
ELEKTRISCHE SHUNTINGVORRICHTUNG FÜR EIN SCHIENENFAHRZEUGRAD
ELECTRICAL SHUNTING DEVICE FOR A WHEEL OF A RAILWAY VEHICLE

(30) Priorité: 03.08.2020 FR 2008235
(43) Date de publication de la demande: 02.03.2022
(73) Titulaire: ALSTOM Transport Technologies, 93400 Saint-Ouen-sur-Seine (FR)
(72) Inventeur: MAHLA, Abdelkader, 71300 MONTCEAU LES MINES (FR)
(74) Mandataire: Lavoix

(56) Documents cités:
- DE-A1- 2 324 060
- DE-A1- 19 650 913
- DE-U1- 9 319 845

## Description

La présente invention concerne selon un premier aspect un dispositif de shuntage électrique pour une roue de véhicule ferroviaire, la roue comprenant un élément de support, un bandage monté sur l'élément de support, un matériau isolant disposé entre l'élément de support et le bandage de sorte à isoler électriquement le bandage de l'élément de support.

Un élément de shuntage correspondant est connu du document DE 93 19 845 U1.

Lors du déplacement d'un véhicule ferroviaire, il est connu d'utiliser des dispositifs de shuntage permettant d'assurer le retour par les rails et vers la sous-station d'alimentation de courants de traction consommés par le véhicule ferroviaire, ainsi que d'assurer une résistance minimale, inférieure à 10 mOhms, entre les roues droites et gauche et donc de garantir la détection du véhicule (shuntage de voie) via des circuits de voie.

De tels dispositifs de shuntage comprennent généralement des câbles électriques reliant électriquement l'élément de support au bandage de la roue. Ces câbles de liaison jouent le rôle de courts-circuits et empêchent le passage des courants par des éléments en élastomère, ayant une résistance électrique élevée, entre l'élément de support et le bandage.

Cependant, les déplacements de ces câbles provoqués par les mouvements relatifs entre le bandage et l'élément de support, les débattements de l'élastomère et les vibrations conduisent à une usure prématurée des câbles et par la suite à une mauvaise conduction des courants électriques entre le bandage et l'élément de support. Il s'en suit que les fonction retour de courant et détection de véhicule (shuntage de voie) finissent par être dégradées voire perdues.

De plus, les cheminements des câbles de liaison contraints par la géométrie de la roue génèrent des contraintes supplémentaires qui peuvent conduire à la rupture de ces câbles.

L'un des buts de l'invention est de proposer un dispositif de shuntage plus fiable et plus résistant au cours du temps.

A cet effet, l'invention concerne un dispositif de shuntage du type précité dans lequel le dispositif de shuntage comprend :
- un organe de contact conducteur électriquement et destiné à être solidaire de l'un du bandage ou de l'élément de support,
- un corps principal destiné à être fixé sur l'autre du bandage ou de l'élément de support, le corps principal définissant un volume de réception,
- un pion conducteur reçu dans le volume de réception du corps principal, le pion étant mobile en translation selon une première direction par rapport au corps principal, le pion étant disposé en regard de l'organe de contact,
- un élément de contrainte reçu dans le volume de réception, ledit élément de contrainte contraignant le pion vers l'extérieur du volume de réception selon la première direction de sorte que le pion soit maintenu en contact électriquement avec l'organe de contact.

Ainsi, grâce à l'élément de contrainte, le pion, par son déplacement en translation selon la première direction, compense tous les débattements entre l'élément de support et le bandage de la roue. Le contact entre le pion et l'organe de contact assure une bonne conduction des courants électriques entre le bandage et l'élément de support. Les câbles de liaison de l'état de la technique ne sont plus utiles.

La fiabilité et la résistance dans le temps du dispositif de shuntage sont améliorées.

Selon des modes de réalisations différents, le dispositif de shuntage comprend en outre une ou plusieurs des caractéristiques suivantes, prises isolément ou selon toutes les combinaisons techniquement possibles :
- le corps principal comprend un dispositif de guidage en translation du pion selon la première direction ;
- le pion est fait d'un matériau comprenant du carbone, par exemple du graphite ;
- l'élément de contrainte comprend un ressort présentant une direction d'élongation sensiblement confondue avec la première direction ;
- le corps principal comprend un dispositif de guidage du ressort selon la première direction ;
- le ressort est configurée pour être dans une position comprimée ;
- le pion est connecté électriquement à un chemin de retour de courants de traction consommés par le véhicule ferroviaire au moyen d'un élément conducteur.

L'invention concerne également une roue de véhicule ferroviaire comprenant un élément de support, un bandage monté sur l'élément de support, un matériau isolant disposé entre l'élément de support et le bandage de sorte à isoler électriquement le bandage de l'élément de support, et un dispositif de shuntage tel que décrit ci-dessus, la première direction étant une direction radiale de la roue.

Selon un mode de réalisation particulier, la roue comprenant en outre un moyeu et une couronne de pression fixée au moyeu, l'élément de support étant le moyeu ou la couronne de pression.

Enfin, l'invention concerne un véhicule ferroviaire comprenant une roue telle que décrite ci-dessus.

D'autres aspects et avantages de l'invention apparaîtront à la lecture de la description qui suit, à titre d'exemple et faite en référence aux dessins annexés parmi lesquels :
- [Fig 1] la figure 1 est une représentation schématique d'une roue de véhicule ferroviaire selon l'invention comprenant un dispositif de shuntage électrique,
- [Fig 2] la figure 2 est une représentation schématique partielle d'une section de la roue de la figure 1, et
- [Fig 3] la figure 3 est une représentation schématique du dispositif de shuntage de la figure 1.

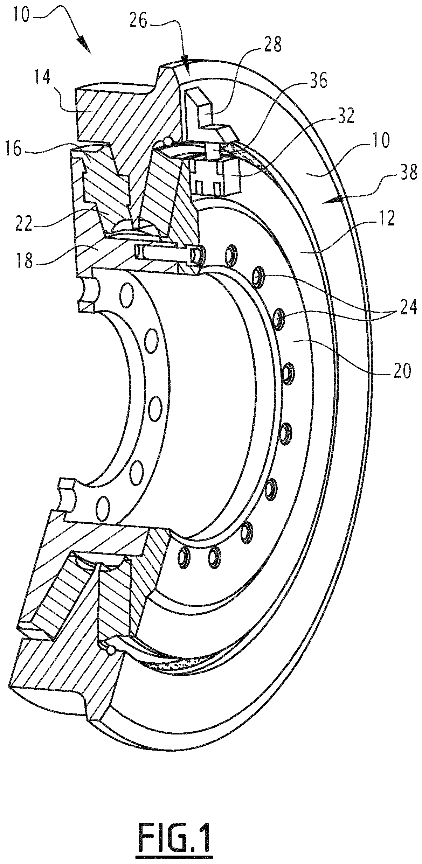

La figure 1 représente une roue 10 de véhicule ferroviaire (non représentée) selon l'invention.

Le véhicule ferroviaire est par exemple un train, un tramway ou un métro.

La roue 10 de véhicule ferroviaire comprend au moins un élément de support 12, un bandage 14 monté sur l'élément de support 12, et un matériau isolant 16 disposé entre le bandage 14 et l'élément de support 12.

Dans l'exemple de la figure 1, la roue 10 comprend un moyeu 18 et une couronne de pression 20 fixée au moyeu 18.

Le moyeu 18, la couronne de pression 20 et le bandage 14 définissent un volume de réception 22 du matériau isolant 16.

Dans cet exemple, l'élément de support 12 est formé par la couronne de pression 20.

La roue 10 est destinée à être fixée sur un essieu (non représenté).

Le matériau isolant 16 est destiné à isoler électriquement le bandage 14 de l'élément de support 12 et est par exemple un matériau élastomère.

La couronne de pression 20 est fixée sur le moyeu 18, par exemple au moyen d'une pluralité de vis 24.

La roue 10 comprend en outre un dispositif de shuntage 26 connectant électriquement l'élément de support 12 au bandage 14.

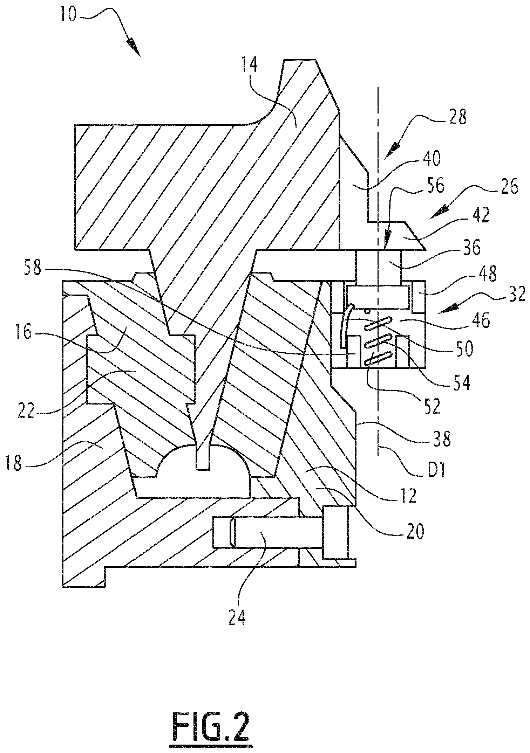

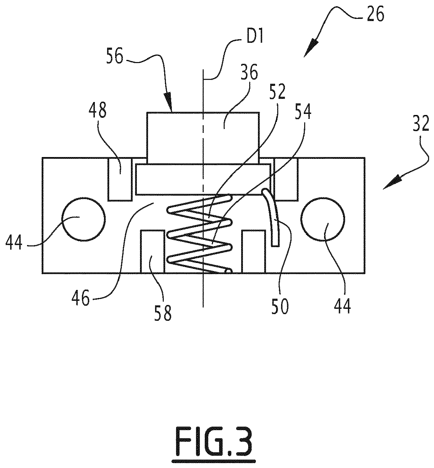

Comme visible plus particulièrement sur les figures 2 et 3, le dispositif de shuntage 26 comprend un organe de contact 28 conducteur électriquement solidaire du bandage 14 de la roue 10.

Le dispositif de shuntage 26 comprend en outre un corps principal 32 conducteur électriquement fixé sur la couronne de pression 20 de la roue 10.

Le dispositif de shuntage 26 comprend également un pion 36 conducteur connecté électriquement au corps principal 32.

L'organe de contact 28 est par exemple vissé ou soudé au bandage 14 de la roue 10.

Dans l'exemple de la figure 1, l'organe de contact 28 est fixé sur une paroi extérieure 38 du bandage 14.

L'organe de contact 28 présente par exemple une forme d'équerre comprenant un premier côté 40 fixé sur le bandage 14 de la roue 10 et s'étendant principalement selon un premier plan et un deuxième côté 42 libre en contact avec le pion 36 conducteur et s'étendant principalement selon un deuxième plan sensiblement perpendiculaire au premier plan.

Le deuxième côté 42 s'étend en saillie de la paroi extérieure 38 du bandage 14 vers l'extérieur de la roue 10.

L'organe de contact 28 est fait en matériau électriquement conducteur, par exemple en cuivre.

Le corps principal 32 est par exemple fixé à la couronne de pression 20 au moyen de vis 44.

En variante, le corps principal 32 est soudé à la couronne de pression 20.

Le corps principal 32 définit un volume de réception 46 recevant le pion 36 conducteur.

Le corps principal 32 est fait en matériau électriquement conducteur, par exemple en cuivre Par exemple, le corps principal 32 et l'organe de contact 28 sont faits du même matériau conducteur.

Le pion 36 conducteur est mobile en translation selon une première direction D1 par rapport au corps principal 32.

De préférence, comme visible sur la figure 2, la première direction D1 est une direction radiale de la roue 10.

Avantageusement, le pion 36 est guidé en translation selon la première direction D1 par un dispositif de guidage 48 du corps principal 32.

Ceci permet de garantir que le déplacement du pion 36 s'effectue toujours uniquement selon la première direction D1 et que des vibrations de la roue 1 n'entrainent pas un mouvement latéral du pion 36 et une usure prématurée du dispositif de shuntage 26.

Le pion 36 est disposé en regard de l'organe de contact 28.

Le pion 36 est préférentiellement fait d'un matériau comprenant du carbone, par exemple du graphite afin de lui conférer une conductivité électrique élevée.

Le pion 36 est en outre connecté au corps principal 32 au moyen d'un élément conducteur 50, de préférence souple.

Par exemple, l'élément conducteur 50 est un câble conducteur ou une tresse vissé(e) ou soudé au corps principal 32.

Ceci permet d'assurer un contact électrique constant entre le pion 36 conducteur et le corps principal 32.

Le dispositif de shuntage 26 comprend en outre un élément de contrainte 52 reçu dans le volume de réception 46.

Le dispositif de contrainte 52 contraint le pion 36 vers l'extérieur du volume de réception 46 selon la première direction D1 de sorte que le pion 36 est maintenu en contact électriquement avec l'organe de contact 28.

Ainsi, même en cas de vibrations, le pion 36 conducteur est toujours en contact avec l'organe de contact 28.

Par exemple, comme représenté schématiquement sur les figures 2 et 3, l'élément de contrainte 52 est un ressort 54 présentant une direction d'élongation sensiblement confondue avec la première direction D1.

Lorsque le dispositif de shuntage 26 est fixé sur la roue 10, le ressort 54 est configuré pour être maintenu dans une position comprimée. Ainsi, une surface extérieure 56 du pion 36 conducteur est maintenue en contact avec l'organe de contact 28 et plus particulièrement avec le deuxième côté 42 libre de l'organe de contact 28.

De préférence, le dispositif de shuntage 26 comprend en outre un dispositif de guidage 58 du ressort 52 selon la première direction D1.

En variante, le corps principal est un boîtier isolant et le dispositif de shuntage comprend un câble relié d'un côté électriquement au pion 36 et de l'autre à une borne de retour de courant, par exemple positionnée sur le bogie, ou sur le moyeu ou sur l'essieu et avantageusement elle-même reliée électriquement au coffre de traction. Avantageusement, selon cette variante, chaque roue comprend au moins un dispositif de shuntage, et les dispositifs de shuntage des roues d'un même essieu sont reliés entre eux par des câbles électriques s'étendant notamment le long de l'essieu.

Ainsi, grâce à l'invention, les courants électriques, correspondant au retour de courant d'alimentation du véhicule ferroviaire, circulent entre l'élément de support 12 et le bandage de la roue 14 en passant par l'organe de contact 28, le pion 36 et le corps principal 32 et l'élément conducteur 50. Le dispositif de shuntage assure que la circulation du retour de courant se fasse de l'élément de support vers le bandage et donc vers le fil de rail avec lequel la roue est en contact, en passant directement par le dispositif de shuntage et sans passer par les zones en matériau élastomère, ce qui réduit l'usure des zones en matériau élastomère et permet de garantir une résistance inférieure à 10 mOhms, entre les roues droites et gauche.

Le dispositif de shuntage est moins sensible aux mouvements relatifs entre le bandage 14 et l'élément de support 12, aux débattements du matériau isolant 16 et aux vibrations de l'ensemble. Le dispositif selon l'invention est donc moins sensible à l'usure que les câbles de liaisons de l'état de la technique et permet de garantir dans le temps les fonctions retour de courant et détection de véhicule (shuntage de voie).

Un deuxième mode de réalisation (non représenté) de l'invention est maintenant décrit.

Ce mode de réalisation est semblable au premier mode de réalisation décrit ci-dessous à l'exception que l'élément de support 12 sur lequel est fixé le corps principal 32 du dispositif de shuntage 26 est le moyeu 18.

Un troisième mode de réalisation (non représenté) de l'invention est maintenant décrit.

Ce mode de réalisation est semblable au premier mode de réalisation décrit ci-dessus, à l'exception que le corps principal du dispositif de shuntage 26 est fixé sur le bandage 14 de la roue 10. L'organe de contact 28 est fixé à l'élément de support 12, c'est-à-dire soit sur le moyeu 18, soit sur la couronne de pression 20.

Selon une autre variante, la roue comprend un logement spécifique, par exemple formé entre le moyeu et la couronne de pression et propre à recevoir le dispositif de shuntage. Le logement est par exemple formé dans volume de réception 22 du matériau isolant 16. Dans cette variante, l'organe de contact est avantageusement formé par le bandage lui-même.

Ainsi, le dispositif selon l'invention est particulièrement avantageux car, grâce à l'élément de contrainte, le pion, par son déplacement en translation selon la première direction, compense tous les débattements entre l'élément de support et le bandage de la roue. Le contact entre le pion et l'organe de contact assure une bonne conduction des courants électriques entre le bandage et l'élément de support. Les câbles de liaison de l'état de la technique ne sont plus utiles. La fiabilité et la résistance dans le temps du dispositif de shuntage sont améliorées.

## Revendications

1. Dispositif de shuntage électrique (26) pour une roue (10) de véhicule ferroviaire, la roue (10) comprenant un élément de support (12), un bandage (14) monté sur l'élément de support (12), un matériau isolant (16) disposé entre l'élément de support (12) et le bandage (14) de sorte à isoler électriquement le bandage (14) de l'élément de support (12),
le dispositif de shuntage (26) comprenant :
- un organe de contact (28) conducteur électriquement et destiné à être solidaire de l'un du bandage (14) ou de l'élément de support (12),
- un corps principal (32) destiné à être fixé sur l'autre du bandage (14) ou de l'élément de support (12), le corps principal (32) définissant un volume de réception (46), **caractérisé en ce que** le dispositif comprenant:
- un pion (36) conducteur reçu dans le volume de réception (46) du corps principal (32), le pion (36) étant mobile en translation selon une première direction (D1) par rapport au corps principal (32), le pion (36) étant disposé en regard de l'organe de contact (28),
- un élément de contrainte (52) reçu dans le volume de réception (46), ledit élément de contrainte (52) contraignant le pion (36) vers l'extérieur du volume de réception (46) selon la première direction (D1) de sorte que le pion (36) soit maintenu en contact électriquement avec l'organe de contact (28).

2. Dispositif de shuntage (26) selon la revendication 1, dans lequel le corps principal (32) comprend un dispositif de guidage (48) en translation du pion (36) selon la première direction (D1).

3. Dispositif de shuntage (26) selon la revendication 1 ou 2, dans lequel le pion (36) est fait d'un matériau comprenant du carbone, par exemple du graphite.

4. Dispositif de shuntage (26) selon l'une quelconque des revendications 1 à 3, dans lequel l'élément de contrainte (52) comprend un ressort (54) présentant une direction d'élongation sensiblement confondue avec la première direction (D1).

5. Dispositif de shuntage (26) selon la revendication 4, dans lequel le corps principal (32) comprend un dispositif de guidage (58) du ressort (54) selon la première direction (D1).

6. Dispositif de shuntage (26) selon la revendication 4 ou 5, dans lequel le ressort (54) est configurée pour être dans une position comprimée.

7. Dispositif de shuntage (26) selon l'une quelconque des revendications 1 à 6, dans lequel le pion (36) est connecté électriquement à un chemin de retour de courants de traction consommés par le véhicule ferroviaire au moyen d'un élément conducteur (50).

8. Roue (10) de véhicule ferroviaire comprenant un élément de support (12), un bandage (14) monté sur l'élément de support (12), un matériau isolant (16) disposé entre l'élément de support (12) et le bandage (14) de sorte à isoler électriquement le bandage (14) de l'élément de support (12), et un dispositif de shuntage (26) selon l'une quelconque des revendications 1 à 7, la première direction (D1) étant une direction radiale de la roue (10).

9. Roue (10) selon la revendication 8, comprenant en outre un moyeu (18) et une couronne de pression (20) fixée au moyeu (18), l'élément de support (12) étant le moyeu (18) ou la couronne de pression (20).

10. Véhicule ferroviaire comprenant au moins une roue (10) selon la revendication 8 ou 9.

## Patentansprüche

1. Elektrische Nebenschlussvorrichtung (26) für ein Rad (10) eines Schienenfahrzeugs, das Rad (10) umfassend ein Trägerelement (12), einen Radreifen (14), der auf dem Trägerelement (12) montiert ist, und ein Isoliermaterial (16), das zwischen dem Trägerelement (12) und der Radreifen (14) angeordnet ist, um den Radreifen (14) elektrisch von dem Trägerelement (12) zu isolieren,
die Nebenschlussvorrichtung (26) umfassend:
- ein Kontaktorgan (28), das elektrisch leitend und dazu bestimmt ist, fest mit einem der Radreifen (14) oder dem Trägerelement (12) verbunden zu werden,
- einen Hauptkörper (32), der dazu bestimmt ist, an dem anderen von dem Radreifen (14) oder dem Trägerelement (12) befestigt zu werden, wobei der Hauptkörper (32) ein Aufnahmevolumen (46) definiert, **dadurch gekennzeichnet, dass** die Vorrichtung Folgendes umfasst:
- einen leitenden Stift (36), der in dem Aufnahmevolumen (46) des Hauptkörpers (32) aufgenommen ist, wobei der Stift (36) in einer ersten Richtung (D1) in Bezug auf den Hauptkörper (32) translatorisch beweglich ist, wobei der Stift (36) gegenüber dem Kontaktorgan (28) angeordnet ist,
- ein in dem Aufnahmevolumen (46) aufgenommenes Spannelement (52), wobei das Zwangselement (52) den Stift (36) in der ersten Richtung (D1) aus dem Aufnahmevolumen (46) heraus spannt, sodass der Stift (36) in elektrischem Kontakt mit dem Kontaktorgan (28) gehalten wird.

2. Nebenschlussvorrichtung (26) nach Anspruch 1, wobei der Hauptkörper (32) eine Vorrichtung (48) zur translatorischen Führung des Stifts (36) in der ersten Richtung (D1) umfasst.

3. Nebenschlussvorrichtung (26) nach Anspruch 1 oder 2, wobei der Stift (36) aus einem kohlenstoffhaltigen Material, z. B. Graphit, gefertigt ist.

4. Nebenschlussvorrichtung (26) nach einem der Ansprüche 1 bis 3, wobei das Spannelement (52) eine Feder (54) umfasst, die eine Erstreckungsrichtung aufweist, die im Wesentlichen mit der ersten Richtung (D1) zusammenfällt.

5. Nebenschlussvorrichtung (26) nach Anspruch 4, wobei der Hauptkörper (32) eine Vorrichtung (58) zur Führung der Feder (54) in der ersten Richtung (D1) umfasst.

6. Nebenschlussvorrichtung (26) nach Anspruch 4 oder 5, wobei die Feder (54) konfiguriert ist, um in einer komprimierten Position zu sein.

7. Nebenschlussvorrichtung (26) nach einem der Ansprüche 1 bis 6, wobei der Stift (36) mittels eines Leitelements (50) elektrisch mit einem Rückleitungspfad von Traktionsströmen verbunden ist, die von dem Schienenfahrzeug aufgenommen werden.

8. Schienenfahrzeugrad (10), umfassend ein Trägerelement (12), einen Radreifen (14), der auf dem Trägerelement (12) montiert ist, ein Isoliermaterial (16), das zwischen dem Trägerelement (12) und dem Radreifen (14) angeordnet ist, um den Radreifen (14) elektrisch von dem Trägerelement (12) zu isolieren, und eine Nebenschlussvorrichtung (26) nach einem der Ansprüche 1 bis 7, wobei die erste Richtung (D1) eine radiale Richtung des Rads (10) ist.

9. Rad (10) nach Anspruch 8, ferner umfassend eine Nabe (18) und einen an der Nabe (18) befestigten Druckring (20), wobei das Trägerelement (12) die Nabe (18) oder der Druckring (20) ist.

10. Schienenfahrzeug, umfassend mindestens ein Rad (10) nach Anspruch 8 oder 9.

## Claims

1. An electrical shunting device (26) for a railway vehicle wheel (10), the wheel (10) comprising a support member (12), a tyre (14) mounted on the support member (12), an insulating material (16) disposed between the support member (12) and the tyre (14) so as to electrically isolate the tyre (14) from the support member (12),
the shunting device (26) comprising:
- an electrically conductive contact member (28) for attachment to either the tyre (14) or the support member (12),
- a main body (32) for attachment to the other of the bandage (14) or the support member (12), the main body (32) defining a receiving volume (46), **characterised in that** the device comprises:
- a conductive pin (36) received in the reception volume (46) of the main body (32), the pin (36) being movable in translation in a first direction (D1) with respect to the main body (32), the pin (36) being disposed opposite the contact member (28),
- a constraining element (52) received in the receiving volume (46), said constraining element (52) constraining the pin (36) outwardly from the receiving volume (46) in the first direction (D1) so that the pin (36) is held in electrical contact with the contact member (28).

2. The shunting device (26) according to claim 1, wherein the main body (32) comprises a translational guide device (48) for guiding the pin (36) in the first direction (D1).

3. The shunting device (26) according to claim 1 or 2, wherein the pin (36) is made of a material comprising carbon, for example graphite.

4. The shunting device (26) according to any one of claims 1 to 3, wherein the constraining element (52) comprises a spring (54) having a direction of elongation substantially coincident with the first direction (D1).

5. The shunting device (26) according to claim 4, wherein the main body (32) comprises a guide device (58) for guiding the spring (54) in the first direction (D1).

6. The shunting device (26) according to claim 4 or 5, wherein the spring (54) is configured to be in a compressed position.

7. The shunting device (26) according to any one of claims 1 to 6, wherein the pin (36) is electrically connected to a return path of traction currents drawn by the railway vehicle by means of a conductive element (50).

8. A railway vehicle wheel (10) comprising a support member (12), a tyre (14) mounted on the support member (12), insulating material (16) disposed between the support member (12) and the tyre (14) so as to electrically isolate the tyre (14) from the support member (12), and a shunting device (26) according to any one of claims 1 to 7, the first direction (D1) being a radial direction of the wheel (10).

9. The wheel (10) according to claim 8, further comprising a hub (18) and a pressure ring (20) attached to the hub (18), the support member (12) being the hub (18) or the pressure ring (20).

10. A railway vehicle comprising at least one wheel (10) according to claim 8 to 9.
